**Europäisches Patentamt**

**European Patent Office**

**Office européen des brevets**

Veröffentlichungsnummer: **0 298 253**
**A2**

# EUROPÄISCHE PATENTANMELDUNG

Anmeldenummer: 88108734.0

Int. Cl.⁴ **C02F 1/62**

Anmeldetag: 01.06.88

Priorität: 09.07.87 DE 3722678

Veröffentlichungstag der Anmeldung:
**11.01.89 Patentblatt 89/02**

Benannte Vertragsstaaten:
**AT BE CH DE ES FR GB GR IT LI NL SE**

Anmelder: **Degussa Aktiengesellschaft**
**Weissfrauenstrasse 9**
**D-6000 Frankfurt am Main 1(DE)**

Erfinder: **Baumbach, Ernst-August, Dr.**
**Platanen Ring 116**
**D-6380 Bad Homburg(DE)**

## Verfahren zur Abtrennung von Schwermetallionen aus Industrieabwässern.

Um in Industrieabwässer insbesondere die Gehalte an Kadmium, Zink und Blei möglichst niedrig zu halten, werden diesen Hydroxide von Aluminium, Eisen und oder Chrom in mindestens zehnfacher Menge, bezogen auf die Summe der Mole der Schwermetallionen, bei pH-Werten von 7.5 bis 8,0 zugesetzt. Nach 1 bis 30 Stunden werden die Hydroxide abfiltriert und man erhält Cd-Werte $\leq 0.04$ mg l, Zn-Werte $\leq 0.07$ mg l und Bleiwerte $\leq 0.4$ mg l.

POOR QUALITY

EP 0 298 253 A2

## Verfahren zur Abtrennung von Schwermetallionen aus Industrieabwässern

Die Erfindung betrifft ein Verfahren zur Abtrennung von Schwermetallionen aus Industrieabwässern, insbesondere zur Entfernung von Kadmium, Zink und Blei aus Abwässern, die bei der Farbkörperherstellung anfallen, durch Bildung schwerlöslicher Metallverbindungen bei Raumtemperatur und deren Abfiltration nach längerer Verweilzeit aus den Abwässern.

Es ist bekannt, (Metall 33 (1979), 272-274), Schwermetallionen aus Abwässern der chemischen und der NE-Metallindustrie durch Neutralisationsfällung abzutrennen. Durch Zusatz von Natronlauge, Kalkmilch oder Soda werden bei pH-Werten zwischen 8 und 10 schwerlösliche Hydroxide ausgefällt, die durch Filtration entfernt werden. Das so geklärte Abwasser ist zwar weitgehend frei von Schwermetallen, enthält aber im Regelfall immer noch mehr als jeweils 2 mg l, beispielsweise an Kadmium, Zink und Blei, was in vielen kommunalen Kläranlagen oder zur Einleitung in einen Vorfluter nicht mehr tolerierbar ist. Außerdem ist das Abwasser alkalisch und muß neutralisiert werden.

Es ist weiterhin bekannt (Galvanotechnik, 63 (1972), 641-643) Schwermetallionen aus Abwässern mit Hilfe von Strontiumphosphat und Aluminiumphosphat mitzufällen. Dazu werden den schwermetallhaltigen Abwässern Phosphat und Strontium- bzw. Aluminiumsalze bei Raumtemperatur und pH-Werten zwischen 8 und 10 zugesetzt.

Die Fällungen werden nach 2 bis 18 Stunden abfiltriert. Bei pH-Werten um 10 erreicht man hiermit Metallkonzentrationen von 0.1 mg l, bei pH-Werten um 8 jedoch nur etwa jeweils 2 mg l an Kadmium und Zink.

Besonders bei der Farbkörperherstellung fallen Abwässer an, die größere Mengen an Chrom, Kupfer, Eisen, Nickel, Kobalt, Kadmium, Zink und Blei enthalten.

Es war daher Aufgabe der vorliegenden Erfindung, ein Verfahren zur Abtrennung von Schwermetallionen aus Industrieabwässern, insbesondere zur Entfernung von Kadmium, Zink und Blei aus Abwässern, die bei der Farbkörperherstellung anfallen, durch Bildung schwerlöslicher Metallverbindungen bei Raumtemperatur und deren Abfiltration nach längerer Verweilzeit aus den Abwässern zu entwickeln, bei dem Grenzwerte von weniger als 0.1 mg l bei Kadmium und Zink und weniger als 0.6 mg l bei Blei erreichbar sind und die pH-Werte bei 8 und darunter liegen.

Diese Aufgabe wird erfindungsgemäß dadurch gelöst, daß den Abwässern Aluminium-, Eisen- und oder Chromhydroxide mit einem mehr als zehnfachen Überschuß, bezogen auf die Summe der Mole der Schwermetallionen, bei einem pH-Wert zwischen 7.5 und 8.0 zugesetzt werden und diese unter Rühren 1 bis 30 Stunden vor dem Abfiltrieren in den Abwässern verbleiben.

Vorzugsweise verwendet man einen Überschuß vom fünfzehn- bis zum einhundertfünfzigfachen an Hydroxiden, bezogen auf die Summe der Mole der Schwermetallionen in den Abwässern.

Besonders niedrige Grenzwerte an Kadmium, Zink und Blei erhält man, wenn man den Abwässern ein Gemisch von Eisen- und Chromhydroxid zusetzt, insbesondere ein Gemisch aus 3.5 Molteilen Eisenhydroxid und 1 Molteil Chromhydroxid.

Überraschenderweise lassen sich mit dem erfindungsgemäßen Verfahren die Kadmiumgehalte im Abwasser auf Werte ≤ 0.04 mg l, die Zinkgehalte auf Werte ≤ 0.07 mg l und die Bleigehalte auf Werte ≤ 0.4 mg l reduzieren, wobei das Filtrat nur sehr schwach alkalisch ist und ohne Nachbehandlung der kommunalen Kläranlage oder dem Vorfluter zugeleitet werden kann. Es erfolgt hierbei eine Sorption der Schwermetallionen, gegebenenfalls in Form ihrer Hydroxide, an der Oberfläche der Hydroxide, vorzugsweise in frischgefällter Form.

Folgende Beispiele sollen das erfindungsgemäße Verfahren näher erläutern:

1. 2 Kubikmeter Abwasser, das 1.4 mg l Cd, 1.9 mg l Zn, 1.0 mg l Pb, 0.24 mg l Cr, 0.12 mg l Fe, 0.12 mg l Cu, 0.2 mg l Ni und 0.8 mg l Co enthielt, wurde mit 0.395 kg frischgefälltem Cr (OH)₃ (3.85 mol) und 1.44 kg (13.48 mol) frischgefälltem Fe (OH)₃ versetzt und ein pH-Wert von 7.5 mittels Natronlauge eingestellt. Nach zweistündigem Rühren wurden die Hydroxide 15 Stunden absitzen lassen und dann abfiltriert. Das Filtrat enthielt: 0.023 mg l Cd, 0.046 mg l Zn, 0.23 mg l Pb, 0.23 mg l Cr, 0.46 mg l Fe, 0.12 mg l Cu, 0.13 mg l Ni und 0.13 mg l Co. Dieses gereinigte Abwasser kann ohne Nachbehandlung direkt in eine kommunale Kläranlage oder einen Vorfluter eingeleitet werden

2. 2 Kubikmeter Abwasser mit Schwermetallionengehalten wie Beispiel 1 wurden 0.48 mol Cr (OH)₃ und 1.69 mol Fe (OH)₃ zugesetzt und der pH-Wert auf 7.8 eingestellt. Nach zwölfstündigem Rühren wurden die Hydroxide abfiltriert und folgende Metallgehalte im Filtrat analysiert: 0.021 gm l Cd, 0.042 mg l Zn und 0.21 mg l Pb

3. In 2 Kubikmeter Abwasser gemäß Beispiel 1 wurde 17.35 mol frischgefälltes Al (OH)₃ eingetragen und der pH-Wert auf 7.9 eingestellt. Nach zwanzigstündigem Rühren wurde das Hydroxid abfiltriert und im Filtrat folgende Metallgehalte analysiert: 0.036 mg l Cd, 0.07 mg l Zn, 0.36 mg l Pb, 0.24 mg l Cr, 0.12 mg l Fe, 0.12 mg l Cu, 0.12 mg l Ni und 0.12 mg l Co.

4. In 2 Kubikmeter Abwasser gemäß Beispiel 1 wurde 17,35 mol Fe (OH)$_3$ gegeben und der pH-Wert auf 7.7 eingestellt. Nach fünfundzwanzigstündigem Rühren wurde abfiltriert und im Filtrat folgende Metallgehalte analysiert: 0,024 mg l Cd, 0,06 mg l Zn, 0,24 mg l Pb, 0,24 mg l Cr, 0,12 mg l Fe, 0,12 mg l Cu, 0,12 mg l Ni und 0,12 mg l Co.

## Ansprüche

1. Verfahren zur Abtrennung von Schwermetallionen aus Industrieabwässern, insbesondere zur Entfernung von Kadmium, Zink und Blei aus Abwässern, die bei der Farbkörperherstellung anfallen, durch Bildung schwerlöslicher Metallverbindungen bei Raumtemperatur und deren Abfiltration nach längerer Verweilzeit aus Abwässern,
dadurch gekennzeichnet,
daß den Abwässern Aluminium-, Eisen- und oder Chromhydroxide mit einem mehr als zehnfachen Überschuß, bezogen auf die Summe der Mole der Schwermetallionen, bei einem pH-Wert zwischen 7.5 und 8.0 zugesetzt werden und diese unter Rühren 1 bis 30 Stunden vor dem Abfiltrieren in den Abwässern verbleiben.

2. Verfahren nach Anspruch 1,
dadurch gekennzeichnet,
daß der Überschuß an Hydroxid das fünfzehn- bis einhundertfünfzigfache beträgt, bezogen auf die Summe der Mole der Schwermetallionen in den Abwässern.

3. Verfahren nach Anspruch 1 oder 2,
dadurch gekennzeichnet,
daß ein Gemisch von Eisenhydroxid und Chromhydroxid den Abwässern zugesetzt wird.